# EUROPEAN PATENT APPLICATION

(11) **EP 2 749 909 A2**
(43) Date of publication of application: **02.07.2014**
(21) Application number: 13198339.7
(22) Date of filing: 19.12.2013
(51) Int. Cl.: G01V 3/12, G01V 8/00

(54) **Human body security inspection apparatus and method**

(30) Priority: 27.12.2012 CN 201210581556
(71) Applicant: Nuctech Company Limited, Haidian District, Beijing 100084 (CN); Tsinghua University, Haidian District, Beijing 100084 (CN)
(72) Inventor: Chen, Zhiqiang, 100084 BEIJING (CN); Zhao, Ziran, 100084 BEIJING (CN); Wu, Wanlong, 100084 BEIJING (CN); Li, Yuanjing, 100084 BEIJING (CN); Shen, Zongjun, 100084 BEIJING (CN); Zhang, Li, 100084 BEIJING (CN); Liu, Yinong, 100084 BEIJING (CN); Cui, Jin, 100084 BEIJING (CN); Jin, Yingkang, 100084 BEIJING (CN); Li, Liang, 100084 BEIJING (CN); Xing, Yuxiang, 100084 BEIJING (CN); Xiao, Yongshun, 100084 BEIJING (CN)
(74) Representative: Fontenelle, Sandrine

(57) **Abstract**

The present invention discloses a human body security inspection apparatus and a corresponding method. Specifically, the apparatus comprises: a human body security inspection device (1), configured to scan the human to be inspected (2) in order to inspect whether the human to be inspected (2) carries prohibited articles; a KINECT sensor (3), configured to real-timely acquire information about the human to be inspected (2) so that the human body security inspection device (1) is capable of real-timely acquiring the information of the human to be inspected (2) by means of the KINECT sensor (3), so as to determine whether the information conforms to requirements of the human body security inspection device (1); and a data processing device (4), configured to communicate with the human body security inspection device (1) and the KINECT sensor (3), in order to real-timely analyse and process the information of the human to be inspected (2).

## Description

### BACKGROUND OF THE INVENTION

### 1. Field of the Invention

The present invention relates to a technical field of human body security inspection, and more particularly, to an application that shape or posture information about the human to be inspected is needed in the human body security inspection.

### 2. Description of the Related Art

Currently, most widely used human body security inspection techniques performed by imaging mainly include X-ray back-scattered imaging technique and millimetre wave imaging technique. Up to now, both of them require to obtain an entire image of the target to be detected from scanning. Further, when the image of the surface of human body is formed by these two techniques, the rays or waves cannot penetrate into the human body. Therefore, they both require the human to be inspected to keep a certain posture in a stationary state, upon inspecting, so as to avoid arms and legs masking oxter and inner sides of two legs respectively.

At present, when the process of security inspection is performed, it typically needs the inspector to instruct or guide the human to be inspected, to make and keep the certain posture. This results in very low automation and intelligent degrees in the process of security inspection.

In view of this, it indeed needs a new apparatus and method for human body security inspection.

### SUMMARY OF THE INVENTION

In view of this, an object of the present invention is to alleviate at least one aspect of the above problems and defects in the prior arts.

In order to improve automation and intelligence of the human body security inspection apparatus, the apparatus requires real-timely acquiring the posture of the human to be inspected, so as to achieve at least one of the following purposes: 1) before starting the inspection, it determines whether the posture of the human to be inspected conforms to the requirements; if not, it would indicate the inspector; 2) after the position and posture or the posture of the human to be inspected are/is detected to conform to the requirements, it can sends out a trigger signal to start the inspection so that the apparatus can be automatically started; 3) during the inspection, whether the human to be inspected moves or whether the posture thereof changes shall be determined, and if so, it provides an invalid signal for this inspection; and 4) it can provide data about the posture of the human body for a suspect automatic recognition system of the human body security inspection apparatus.

In accordance with one aspect of the present invention, a human body security inspection apparatus is provided. It comprises: a human body security inspection device, configured to scan the human to be inspected in order to inspect whether the human to be inspected carries prohibited articles; a KINECT sensor, configured to real-timely acquire information about the human to be inspected so that the human body security inspection device is capable of real-timely acquire the information of the human to be inspected by means of the KINECT sensor, so as to determine whether the information conforms to requirements of the human body security inspection device; and a data processing device, configured to communicate with the human body security inspection device and the KINECT sensor, in order to real-timely analyse and process the information of the human to be inspected.

In accordance with another aspect of the present invention, a human body security inspection method is provided. It comprises steps of: making a human to be inspected get into a specified position and pose a specified posture; acquiring information about the human to be inspected by a KINECT sensor, and sending the acquired information to a data processing device; real-timely analysing the information of the human to be inspected by the data processing device; and instructing a human body security inspection device to start inspection of the human to be inspected by the data processing device, after the information of the human to be inspected is detected to conform to requirements of the human body security inspection device.

### BRIEF DESCRIPTION OF THE DRAWINGS

These and other aspects as well as advantages of the present invention will become apparent and readily understood from the description of the preferred embodiments taking in conjunction with the accompanying drawings, in which:
Figure 1 is a schematic view of respective parts of the human body security inspection apparatus and connecting relationship thereof;
Figure 2 is a flowchart for a human body security inspection in accordance with a first embodiment of the present invention; and
Figure 3 is a flowchart for a human body security inspection in accordance with a second embodiment of the present invention.

### DETAILED DESCRIPTION OF THE EMBODIMENTS

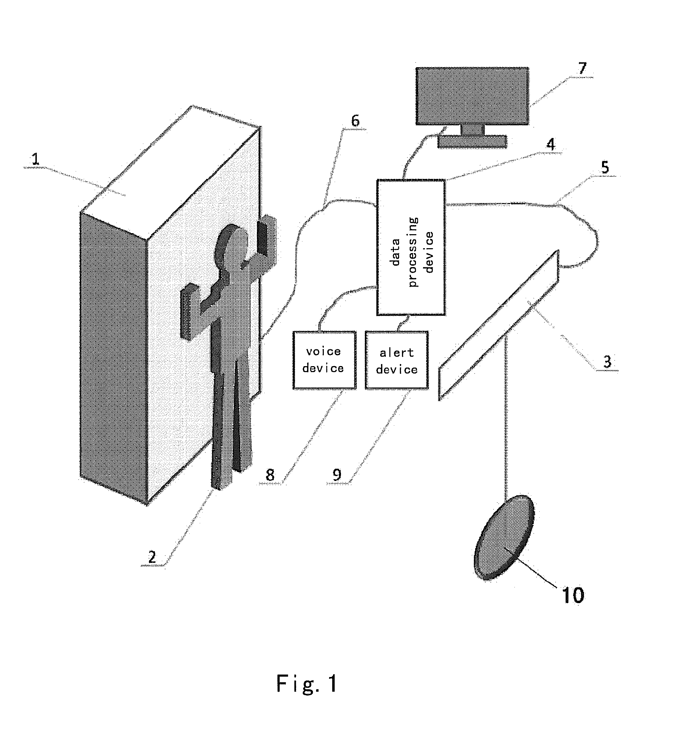

Technical solutions of the present invention will be described hereinafter in more detail by the way of embodiment with reference to figures 1-3 of the attached drawings, wherein the same or like reference numerals refer to the same or like elements throughout the specification. The explanation to the embodiment of the present invention with referring to the accompanying drawings is intended to interpret the general inventive concept of the present invention, rather than being construed as a limiting to the present invention.

At first, figure 1 describes a human body security inspection apparatus in accordance with an embodiment of the present invention. The present human body security inspection apparatus includes a human body security inspection device 1, a KINECT sensor 3 and a data processing device 4. The human body security inspection device 1 is used to scan the human to be inspected 2, so as to detect whether the human to be inspected 2 carries prohibited articles. The KINECT sensor 3 is configured to real-timely acquire information of the human to be inspected 2, so that the human body security inspection device 1 is capable of acquiring the real-time information of the human to be inspected 2 by means of the KINECT sensor 3, to determine whether such information conforms to the requirements of the human to be inspected 2 imposed by the human body security inspection device 1. The KINECT sensor 3 is able to attain the posture information and a combination of the posture information and the position information real-timely. In the present embodiment, if the KINECT sensor 3 can acquire both of the posture information and position information of the human to be inspected 2, then in a subsequent process it can recognize a position of a suspect target on the human body. The data processing device 4 is communicated with the human body security inspection device 1 and the KINECT sensor 3, for real-timely analysing and processing the information about the human to be inspected 2.

Specifically, the human body security inspection device 1 is connected to the data processing device 4 by a data wire 6. Accordingly, the KINECT sensor 3 is connected with the data processing device 4 by a data wire 5. Of course, the human body security inspection device 1, the KINECT sensor 3 and the data processing device 4 can wirelessly communicate with each other.

Further and preferably, the present human body security inspection apparatus can include any one of a display device 7, a voice device 8 and an alert device 9, or a combination thereof for making an alert or displaying information, which can be connected to the data processing device 4 by wires or wirelessly. In the present embodiment, the security inspection apparatus includes all of the display device 7, the voice device 8 and the alert device 9. It should be understood that due to the actual needs and different connecting means, positions of the display device 7, the voice device 8 and the alert device 9 with respect to the data processing device 4 are not limited to those shown in figure 1.

Please be noted that the relative position of the human body security inspection device 1 and the human to be inspected 2 is not limited to that shown in figure 1. Such relative position depends on requirements of specific human body security inspection apparatus.

The KINECT sensor 3 in the present embodiment employs a new human-machine interaction (herein, the term "machine" means a device such a computer which may need to interact with a person), and the corresponding device for performing such function is called as a KINECT sensor. The KINECT sensor can detect positions and movements of each key part of the human body in three-dimensional space, and the information about positions and movements is used as input information for the above "machine".

The KINECT sensor 3 of the present embodiment takes in charge of capturing body actions of the human to be inspected 2, then recognizing, storing and analysing these body actions, to finally obtain the posture information and/or positional information of the human to be inspected 2.

Specifically, the KINECT sensor 3 may be a KINECT based sensor, or a sensor known in the art to perform such function. A camera in the KINECT sensor 3 can capture the posture actions of the human to be inspected 2, and convert these posture actions into useful information codes. In addition, the KINECT sensor 3 in the present embodiment further includes a mount 10, to support relevant parts of the KINECT sensor 3. Of course, the present KINECT sensor 3 is not limited thereto, but may be disposed onto any suitable supporting device as required.

Now a method of human body security inspection in accordance with the present invention is explained in detail below. The inspection method of the present invention is classified as two kinds, one kind of method is to obtain the posture and positional information of the human to be inspected 2 by means of the KINECT sensor 3(see the first embodiment in detail); and the other is to obtain only the posture information of the human to be inspected 2 by means of the KINECT sensor 3(see the second embodiment in detail).

### First Embodiment

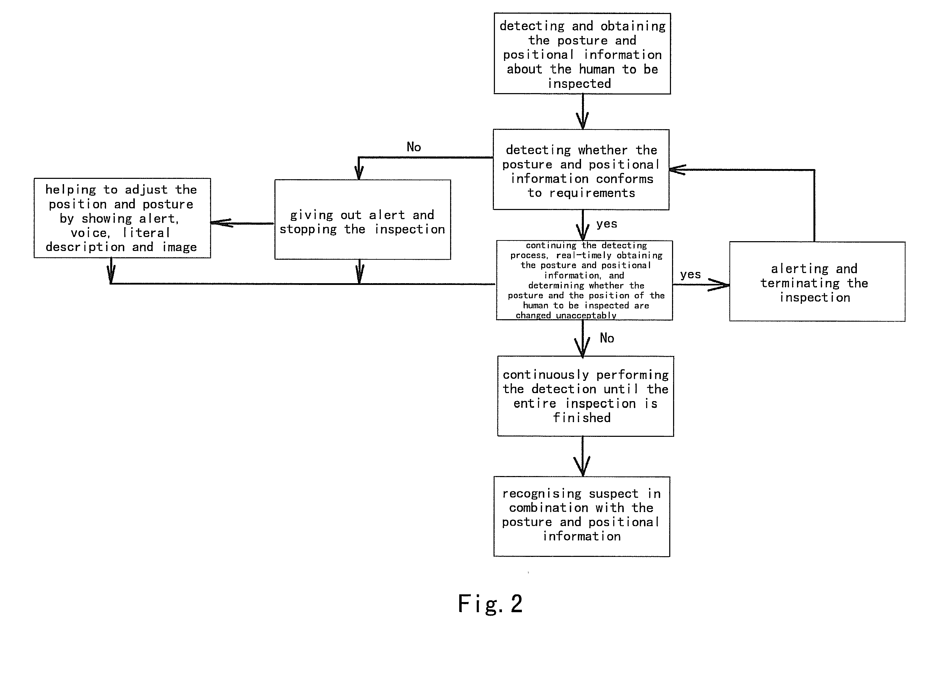

Figure 2 shows specific steps of the method in accordance with the first embodiment of the present invention.

### Step (1) detecting and obtaining the posture and positional information about the human to be inspected

At first, the human to be inspected 2 gets into a specified position and holds a specific posture. During such process, the KINECT sensor 3 real-timely obtains the posture and positional information about the human to be inspected 2, and sends it to the data processing device 4, which real-timely analyses it.

### Step (2) detecting whether the posture and positional information conforms to requirements

The data processing device 4 is used to detect whether the posture and positional information of the human to be inspected 2 conforms to the requirements of the human body security inspection device 1 to the positions and postures of the human to be inspected 2, thereby determining whether to start the inspection of the human body security inspection device 1 to the human to be inspected 2.

If the data processing device 4 detects that the posture and positional information conforms to the relevant requirements, then a step (3) will be performed. Specifically, if so, the human body security inspection device 1 starts to detect the human to be inspected 2 after informing this condition to the inspector, or the human body security inspection device 1 automatically detects the human to be inspected 2. Of course, in the step (3), other methods known in the art can be used to start the human body security inspection device 1 to detect the human to be inspected 2.

If the data processing device 4 detects that the posture and positional information does conform to the relevant requirements, then a step (6) will be performed.

In the step (6), if the posture and position of the human to be inspected 2 are not satisfied with the relevant requirements, then the alert device 9 will make an alert, to indicate the inspector or directly to stop the human body security inspection device 1 from inspecting the human to be inspected 2, until the posture and position conform to the relevant requirements. That is, after the posture and position conform to the relevant requirements, the inspection of the human to be inspected 2 can be performed (i.e., continuation of the step (3)).

If the human to be inspected 2 in the step (6) cannot get into a specified position and pose a required posture with a certain or specified time, then a step (7) will be performed.

If so, in the step (7), the data processing device 4 can make an alert through the alert device 9, or provide a voice instruction through the voice device 8 to tell the human to be inspected 2 the position and posture that he/she shall make, or provide a literal description, image or video through the display device 7 to show the human to be inspected 2 the position and posture that he/she shall make, in order to assist the human to be inspected 2 to enter the specified position and pose the specified posture. The step (3) is performed till the position and posture are detected to conform to the relevant requirements.

### The step (3): continuing the detecting process, real-timely obtaining the posture and positional information, and determining whether the posture and the position of the human to be inspected are changed unacceptably.

Specifically, in the step (3), the process of the human body security inspection device 1 to inspect the human to be inspected 2 is continued, and the KINECT sensor 3 real-timely obtains the posture and positional information of the human to be inspected 2, and sends them to the data processing device 4. The data processing device 4 real-timely analyzes the posture and positional information of the human to be inspected 2, and then determines whether unacceptable changes of the posture and positional information of the human to be inspected 2 occur.

If not, a step (4) is continuously performed.

If so, a step (8) is performed.

In the step (8), once an unacceptable change of the posture and positional information of the human to be inspected 2 occurs, the data processing device 4 will provide one or more kinds of alerts by means of one of the alert device 9, the display device 7 and the voice device 8, or any combination thereof (for example, all of them), and then actively make a further response or inform the inspector to respond to such circumstance (for example, pause the inspection process till the human to be inspected 2 restores to the specified position and posture, or the inspection is terminated). Thereafter, if it is intended to continue the inspection, then it needs to return back to the step (2), to determine whether the position and posture conform to the relevant requirements.

In the step (4), the data processing device 4 instructs the human body security inspection device 1 to continue the inspection to the human to be inspected 2 until an entire inspection is finished.

Step (5) after completing the entire inspection, the data processing device 4 will make a suspect automatic recognition to an image of the human to be inspected 2 acquired by the human body security inspection device 1, in combination with the posture and positional information of the human to be inspected 2 during the inspection (i.e., recognize specific shape and position of the suspect).

### Second Embodiment

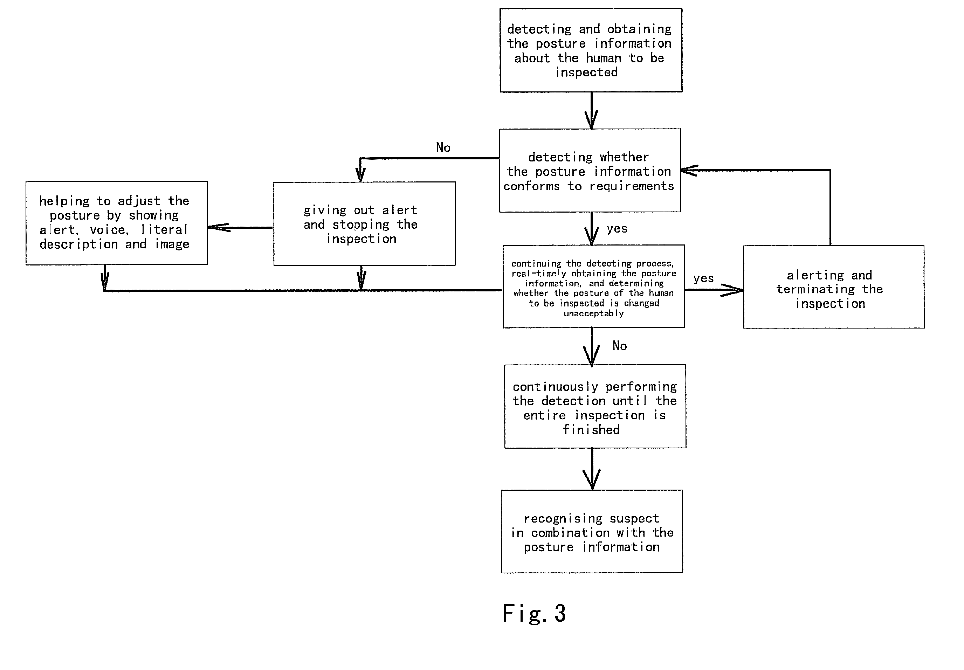

Figure 3 shows specific steps of the method in accordance with the second embodiment of the present invention.

### Step (1) detecting and obtaining the posture information about the human to be inspected

At first, the human to be inspected 2 gets into a specified position and holds a specific posture. During such process, the KINECT sensor 3 real-timely obtains the posture information about the human to be inspected 2, and send it to the data processing device 4, which real-timely analyzes it.

### Step (2) detecting whether the posture information conform to requirements

The data processing device 4 is used to detect whether the posture information of the human to be inspected 2 conforms to the requirements of the human body security inspection device 1 to the posture of the human to be inspected 2, thereby determining whether to start the inspection of the human body security inspection device 1 to the human to be inspected 2.

If the data processing device 4 detects that the posture information conforms to the relevant requirements, then a step (3) is performed. Specifically, if so, the human body security inspection device 1 starts to detect the human to be inspected 2 after informing this condition to the inspector, or the human body security inspection device 1 is automatically controlled to detect the human to be inspected 2. Of course, in the step (3), other methods known in the art can be used to start the human body security inspection device 1 to detect the human to be inspected 2.

If the data processing device 4 detects that the posture information does conform to the relevant requirements, then a step (6) is performed.

In the step (6), if the posture of the human to be inspected 2 is not satisfied with the relevant requirements, then the alert device 9 will make an alert, to indicate the inspector or directly to stop the human body security inspection device 1 from inspecting the human to be inspected 2, until the posture of the human to be inspected 2 conforms to the relevant requirement. That is, after the posture of the human to be inspected 2 conforms to the relevant requirement, the inspection of the human to be inspected 2 can be performed (i.e., the step (3) is continued).

If the human to be inspected 2 in the step (6) cannot pose a required posture with a certain or specified time, then a step (7) is performed.

If so, in the step (7), the data processing device 4 can make an alert through the alert device 9, or provide a voice instruction through the voice device 8 to tell the human to be inspected 2 the posture that he/she shall make, or provide a literal description, image or video through the display device 7 to show the human to be inspected 2 the posture that he/she shall make, in order to assist the human to be inspected 2 to pose the specified posture. The step (3) is performed till the posture is detected to conform to the relevant requirements.

### The step (3): continuing the inspecting process, real-timely obtaining the posture information, and determining whether the posture of the human to be inspected is changed unacceptably.

Specifically, in the step (3), the process of the human body security inspection device 1 to inspect the human to be inspected 2 is continued, and the KINECT sensor 3 real-timely obtains the posture information of the human to be inspected 2, and sends it to the data processing device 4. The data processing device 4 real-timely analyzes the posture information of the human to be inspected 2, and then determines whether unacceptable changes of the posture information of the human to be inspected 2 occur.

If not, a step (4) is continuously performed.

If so, a step (8) is performed.

In the step (8), once an unacceptable change of the posture information of the human to be inspected 2 occurs during the inspection, the data processing device 4 will provide one or more kinds of alerts by means of one of the alert device 9, the display device 7 and the voice device 8, or any combination thereof (for example, all of them), and then actively make a further response or inform the inspector to respond to such circumstance (for example, pause the inspection process till the human to be inspected 2 restores to the specified posture, or the inspection is terminated). Thereafter, if it is intended to continue the inspection, then it needs to return back to the step (2), to determine whether the posture conforms to the relevant requirements.

In the step (4), the data processing device 4 instructs the human body security inspection device 1 to continue the inspection to the human to be inspected 2 until an entire inspection is finished.

In the step (5), after completing the entire inspection, the data processing device 4 will make a suspect automatic recognition to an image of the human to be inspected 2 acquired by the human body security inspection device 1, in combination with the posture information of the human to be inspected 2 during the inspection.

As compared to the prior art, the human body security inspection apparatus and method in accordance with the present embodiment, can improve the automation and intelligence of the human body inspection apparatus and passage, decrease burden of the human inspection personals and enhance robustness of the human security inspection apparatus. It is also possible to provide the posture information and/or the positional information for the suspect automatic recognition algorithm within the data processing software of the human body security inspection apparatus, reduce programming difficulty of the suspect automatic recognition algorithm, and increase the accuracy of the suspect automatic recognition algorithm.

Although some embodiments of the general inventive concept are illustrated and explained, it would be appreciated by those skilled in the art that modifications and variations may be made in these embodiments without departing from the principles and spirit of the general inventive concept of the disclosure, the scope of which is defined in the appended claims and their equivalents.

## Claims

1. A human body security inspection apparatus, wherein it comprises:
a human body security inspection device (1), configured to scan the human to be inspected (2) in order to inspect whether the human to be inspected (2) carries prohibited articles;
a KINECT sensor (3), configured to real-timely acquire information about the human to be inspected (2) so that the human body security inspection device (1) is capable of real-timely acquiring the information of the human to be inspected (2) by means of the KINECT sensor (3), so as to determine whether the information conforms to requirements of the human body security inspection device (1); and
a data processing device (4), configured to communicate with the human body security inspection device (1) and the KINECT sensor (3), in order to real-timely analyse and process the information of the human to be inspected (2).

2. The human body security inspection apparatus of claim 1, **characterized in that**,
the KINECT sensor (3) real-timely acquires posture information of the human to be inspected (2), or a combination of posture information and positional information of the human to be inspected (2).

3. The human body security inspection apparatus of claim 1, **characterized in that**,
the human body security inspection device (1) is connected to the data processing device (4) by a data wire (6), and the KINECT sensor (3) is connected to the data processing device (4) by a data wire (5).

4. The human body security inspection apparatus of claim 1, **characterized in that**,
the human body security inspection device (1) is wirelessly communicated with the data processing device (4), and the KINECT sensor (3) is wirelessly communicated with the data processing device (4).

5. The human body security inspection apparatus of claim 1, **characterized in that**,
it further comprises any one of a display device (7), a voice device (8) and an alert device (9), or any combination thereof, which is /are wirelessly or by a wire connected with the data processing device (4).

6. A human body security inspection method, **characterized in that**, it comprises steps of:
making human to be inspected (2) get into a specified position and pose a specified posture;
acquiring information about the human to be inspected (2) by a KINECT sensor (3), and sending the acquired information to a data processing device (4);
real-timely analysing the information of the human to be inspected (2) by the data processing device (4); and
instructing a human body security inspection device (1) to start inspection of the human to be inspected (2) by the data processing device (4), after the information of the human to be inspected (2) is detected to conform to requirements of the human body security inspection device (1).

7. The human body security inspection method of claim 6, **characterized in that**, the information acquired by the KINECT sensor (3) comprises posture information of the human to be inspected (2), or a combination of posture information and positional information of the human to be inspected (2); and the data processing device (4) gives out the instruction to inform a security inspector to start the inspection of the human body security inspection device (1) to the human to be inspected (2), or to automatically start the inspection of the human body security inspection device (1) to the human to be inspected (2).

8. The human body security inspection method of claim 7, **characterized in that**,
if the posture or the posture and the position of the human to be inspected (2) does/do not conform to the requirements, then an alert device(9) will make an alert, to indicate a security inspector to stop or automatically stop the inspection of the human body security inspection device (1) to the human to be inspected (2); and further after receipt of the alert, the human to be inspected (2) shall adjust the posture and position thereof or the posture thereof so that the information about the posture and the information about the position or the information about the posture conform(s) to the relevant requirements, then the inspection is continued.

9. The human body security inspection method of claim 8, **characterized in that**,
if the human to be inspected (2) cannot get into the specified position and pose the specified posture as required within a specified period after receipt of the alert, the data processing device (4) will enable the alert device (9) to again make an alert, the voice device (8) to again provide a voice instruction or the display device (7) to again provide a literal description, image or video, in order to indicate the position where the human to be inspected (2) shall enter and the posture that the human to be inspected (2) shall make, until the posture and positional information or the posture information conform(s) to the relevant requirements.

10. The human body security inspection method of claim 7, **characterized in that**,
if the information of the human to be inspected (2) detected by the data processing device (4) conforms to the relevant requirements of the human body security inspection device (1), then the human body security inspection device (1) continues the inspection of the human to be inspected (2), the KINECT sensor (3) real-timely acquires the posture and positional information or the posture information of the human to be inspected (2) and sends them/it to the data processing device (4); and the data processing device (4) real-timely analyses the posture and positional information or the posture information, in order to determine whether unacceptable changes of the posture and position or the posture of the human to be inspected (2) occur.

11. The human body security inspection method of claim 10, **characterized in that**,
if during the inspection an acceptable change of the posture and position or the posture of the human to be inspected (2) occurs, the data processing device (4) gives out an alert or instruction by any one of an alert device (9), a display device (7) and a voice device (8) or any combination thereof, and automatically stops or informs the security inspector to stop the inspection of the human body security inspection device (1) to the human to be inspected (2).

12. The human body security inspection method of claim 11, **characterized in that**,
if there still needs to inspect the human to be inspected (2) after stopping of the inspection, then the human to be inspected (2) shall adjust the posture and position or the posture, and it shall again determine whether the posture and position or the posture of the human to be inspected (2) conforms to the requirements of the human body security inspection device (1).

13. The human body security inspection method of claim 12, **characterized in that**,
if the detected posture and position or the detected posture of the human to be inspected (2) conform(s) to the requirements, then the inspection is continued; otherwise, the posture and position or the posture of the human to be inspected (2) shall be readjusted until the requirements are satisfied.

14. The human body security inspection method of claim 10, **characterized in that**,
if during the inspection any unacceptable changes of the posture and position or the posture of the human to be inspected (2) do not occur, then the data processing device (4) instructs to continue the inspection, until a final inspection is finished.

15. The human body security inspection method of claim 14, **characterized in that**,
after completing an entire inspection, making a suspect automatic recognition to an image of the human to be inspected (2) acquired by the human body security inspection device (1), in combination with the posture and positional information or the posture information of the human to be inspected (2) during the inspection.
